# EUROPÄISCHE PATENTSCHRIFT

(11) **EP 3 159 114 B1**
(45) Veröffentlichungstag und Bekanntmachung des Hinweises auf die Patenterteilung: **15.06.2022**
(21) Anmeldenummer: 16179148.8
(22) Anmeldetag: 13.07.2016
(51) Int. Cl.: B25F 5/00

(54) **TRAGBARE ENERGIESPEICHERVORRICHTUNG ZUR VERSORGUNG VON WERKZEUGEN**
PORTABLE ENERGY STORAGE DEVICE FOR SUPPLYING TOOLS
DISPOSITIF D'ACCUMULATION D'ENERGIE PORTATIF DESTINE A ALIMENTER DES OUTILS

(30) Priorität: 09.09.2015 DE 102015217180
(43) Veröffentlichungstag der Anmeldung: 26.04.2017
(73) Patentinhaber: Robert Bosch GmbH, 70442 Stuttgart (DE)
(72) Erfinder: Rieger, Manuel, 74535 Mainhardt-Ammertsweiler (DE); Fluhrer, Andreas, 71540 Murrhardt (DE)

(56) Entgegenhaltungen:
- EP-A1- 2 072 192
- DE-A1- 19 945 994
- US-A1- 2008 238 609
- US-A1- 2015 041 512
- US-A1- 2015 188 332

## Beschreibung

Die vorliegende Erfindung bezieht sich auf eine tragbare Energiespeichervorrichtung. Aus dem Stand der Technik sind seit langem tragbare Werkzeuge mit Antrieben wie beispielsweise tragbare Schraubenzieher oder tragbare Bohrer bekannt. Diese Werkzeuge weisen dabei üblicherweise integrierte Batterien bzw. Akkus auf, welche die Bohrer mit Energie versorgen. Weiterhin sind aus dem Stand der Technik bereits seit Längerem messende Werkzeuge, beispielsweise messende Akkuschrauber bekannt. Diese Geräte weisen zusätzlich Messeinrichtungen, wie etwa Dehnmessstreifen oder dergleichen auf, um Schraubparameter, wie etwa ein Schraubdrehmoment zu erfassen. Eine Sendeeinrichtung sendet derartige gemessene Werte an eine zentrale Erfassungseinrichtung, wie etwa einen Computer. Das Problem bei derartigen Geräten besteht darin, dass oftmals die Leistung des geräteinternen Akkus zu gering ist, um neben dem Antrieb für das Werkzeug auch noch eine ausreichende Funkreichweite zu gewährleisten.

Aus dem internen Stand der Technik der Anmelderin sind darüber hinaus tragbare Akkumulatoren bekannt, welche beispielsweise in einen Rucksack integriert sein können. Diese Vorgehensweisen erlauben die Verwendung größerer Akkus, die Akkus sind jedoch dabei auf die Verwendung eines bestimmten bzw. nur eines Werkzeugs ausgelegt. Mit anderen Worten ermöglichen die im Stand der Technik bekannten Lösungen lediglich Einsatzmöglichkeiten für den mobilen Einsatz eines Geräts bzw. Werkzeugs.

DE 199 45 994 A1 zeigt eine Energieversorgung eines elektrischen Handgeräts gemäß dem Oberbegriff von Patentanspruch 1.

Der vorliegenden Erfindung liegt daher die Aufgabe zugrunde, insbesondere auch den mobilen Einsatz derartiger Werkzeuge zu verbessern. Hierbei soll insbesondere auch auf die Verwendung einer Akku- und Funktechnologie zurückgegriffen werden.

Diese Aufgaben werden jeweils gelöst durch die Gegenstände der unabhängigen Patentansprüche. Vorteile Ausführungsformen und Weiterbildungen sind Gegenstand der Unteransprüche.

Eine erfindungsgemäße tragbare Energiespeichervorrichtung zum Betrieb von elektrisch betriebenen Werkzeugeinrichtungen weist eine tragbare Aufnahmeeinrichtung auf, welche zur Aufnahme einer Energiespeichereinrichtung geeignet und bestimmt ist.

Wie in Anspruch 1 beschrieben, weist die Energiespeichereinrichtung wenigstens zwei Anschlüsse zum Anschluss zweier Werkzeugeinrichtungen auf, wobei die Werkzeugeinrichtungen über diese Anschlüsse unabhängig voneinander betreibbar sind, so dass die Energiespeichervorrichtung wenigstens zwei Anschlüsse zum Anschluss zweier Werkzeugeinrichtungen aufweist, wobei die Werkzeugeinrichtungen über die Anschlüsse unabhängig voneinander betreibbar sind. Alternativ wäre es jedoch auch denkbar, dass lediglich ein Anschluss vorhanden ist und bevorzugt eine Erkennungseinrichtung, welche ein an diesem Anschluss angeschlossenes Gerät bzw. Werkzeug erkennt. Es wird daher vorgeschlagen, eine Energiespeichervorrichtung zur Verfügung zu stellen, welche einen mobilen Einsatz ermöglicht. Dabei soll diese Energiespeichervorrichtung zur Verwendung mit bzw. zur Verwaltung mehrerer Geräte wie handbetätigter Werkzeuge geeignet sein. Dabei ist es möglich und bevorzugt, dass die Energiespeichervorrichtung auch eine synchrone Geräteverwaltung für mehrere Geräte, beispielsweise mehrere handgehaltene messende Schraubwerkzeuge ermöglicht. Insbesondere soll die Energiespeichervorrichtung auch zum Betrieb von messenden Werkzeuggeräten geeignet sein.

Unter dem Begriff Energiespeichervorrichtung wird im Folgenden die gesamte Vorrichtung verstanden und unter dem Begriff Energiespeichereinrichtung insbesondere dasjenige Element, welches zum Speichern der Energie dient, wie etwa ein Akku.

Vorteilhaft handelt es sich bei den Werkzeugeinrichtungen um Schraubgeräte, es wäre jedoch auch eine Verwendung für Bohrgeräte und dergleichen denkbar. Insbesondere weisen die jeweiligen Werkzeugeinrichtungen Antriebe und insbesondere elektromotorische Antriebe auf.

Bei einer weiteren vorteilhaften Ausführungsform weist die Energiespeichervorrichtung und insbesondere die Energiespeichereinrichtung Anschlüsse für Verbindungsleitungen auf. So dass die Werkzeugeinrichtungen über derartige insbesondere flexible Verbindungsleitungen mit der Energiespeichervorrichtung verbunden werden können. Dabei wäre es auch möglich, dass die Energiespeichervorrichtung mehr als zwei derartige Anschlüsse, beispielsweise drei oder vier oder mehr Anschlüsse aufweist, um unterschiedliche Werkzeuge daran anzuschließen. Auch könnten Anschlüsse zur Verfügung stehen, um weitere Einrichtungen wie etwa Beleuchtungseinrichtung daran anzuschließen. Bei einer weiteren vorteilhaften Ausführungsform weist die Energiespeichervorrichtung auch eine Schnittstelle zum Anschluss eines Computers auf.

Insbesondere handelt es sich bei der Energiespeichereinrichtung um einen elektrischen Acku. Weiterhin kann die Energiespeichervorrichtung eine Solarladeeinheit zum Laden der Energiespeichereinrichtung aufweisen. Eine derartige Solareinrichtung kann dabei beispielsweise an einer Außenoberfläche der Energiespeichervorrichtung angeordnet sein.

Bei einer weiteren vorteilhaften Ausführungsform weist die Energiespeichervorrichtung eine zweite Energiespeichereinrichtung, beispielsweise einen zweiten redundanten Akku oder auch einen Ladekondensator oder dergleichen auf. In diesem Falle könnten auch bei Ausfall der Energiespeichereinrichtung bestimmte Funktionen aufrechterhalten werden, wie etwa eine Dateienverwaltung.

Wie in Anspruch 1 beschrieben, weist die Energiespeichervorrichtung eine Sendeeinrichtung zur insbesondere drahtlosen Ausgabe von Daten auf. Es wäre dabei möglich, dass diese Sendeeinrichtung in die Energiespeichervorrichtung selbst integriert ist, es wäre jedoch auch möglich, dass die Sendeeinrichtung in die einzelnen Werkzeuge integriert ist und insbesondere von der Energiespeichervorrichtung bzw. dem Akku oder der Energiespeichereinrichtung mit Energie versorgt wird. Dabei ist es möglich, dass die Sendeeinrichtung entsprechende Funksignale kontinuierlich oder in (insbesondere periodischen) Zeitabständen ausgibt.

So wäre es denkbar, dass Messeinrichtungen in das jeweilige Werkzeug integriert sind und diese Messeinrichtungen Messsignale ausgeben, welche über Funk (und/oder die oben genannten Verbindungskabel an die Sendeeinrichtung der Energiespeichervorrichtung ausgegeben werden, so dass sie von dieser wiederum weitergegeben werden können.

Vorteilhaft handelt es sich bei der Sendeeinrichtung um eine Funkeinrichtung, welche die Signale drahtlos ausgibt.

Wie ebenfalls in Anspruch 1 beschrieben, weist die Energiespeichervorrichtung auch eine Verstärkereinrichtung zur Verstärkung der von der Sendeeinrichtung auszugebenden und/oder der von einer Empfangseinrichtung zu empfangenden Signale auf. Insbesondere sollen mit dieser Verstärkereinrichtung Funksignale verstärkt werden, um so eine größere Reichweite zu erreichen. Auf diese Weise wird auch die Mobilität eines Nutzers, der die jeweiligen Werkzeuge bedient, vergrößert.

Bevorzugt weist die Energiespeichervorrichtung eine Empfangseinrichtung zum (insbesondere drahtlosen) Empfang von Signalen auf. So könnten beispielsweise durch einen Zentralcomputer Steuerbefehle über die Empfangseinrichtung an die einzelnen Werkzeuge ausgebeben werden.

Bei einer weiteren vorteilhaften Ausführungsform ist die Aufnahmeeinrichtung eine von einem Nutzer tragbare oder zu tragende Trageeinrichtung. Vorteilhaft nimmt dabei diese Trageeinrichtung bzw. Aufnahmeeinrichtung die Energiespeichereinrichtung vollständig auf. Dabei ist es insbesondere denkbar, dass die Energiespeichereinrichtung durch die Aufnahmeeinrichtung vor äußeren Einflüssen, wie insbesondere Wasser, beispielsweise Spritzwasser, geschützt ist. Vorteilhaft ist die Energiespeichereinrichtung aus der Aufnahmeeinrichtung entnehmbar. Auf diese Weise kann es beispielsweise zu Reinigungszwecken möglich sein, die Energiespeichereinrichtung wie den Akku aus der Aufnahmeeinrichtung vorübergehend zu entfernen. Dabei ist es denkbar, dass die Energiespeichereinrichtung beispielsweise in zusätzlichen Aufnahmetaschen der Aufnahmevorrichtung untergebracht ist. Vorteilhaft ist die Aufnahmeeinrichtung aus einem waschbaren Material hergestellt. Bei einer weiteren vorteilhaften Ausführungsform ist die Aufnahmeeinrichtung aus einem Textil-Material hergestellt.

Bei einer weiteren bevorzugten Ausführungsform weist die Aufnahmeeinrichtung einen Aufnahmeraum für Werkzeuge auf. So könnten beispielsweise Innentaschen ausgebildet sein, in denen die Werkzeuge untergebracht werden können.

Bei einer weiteren vorteilhaften Ausführungsform weist die Aufnahmeeinrichtung Dämpfungsmittel, bzw. ein Dämpfungsmaterial auf, welches beispielsweise bei einem Aufprall der Aufnahmeeinrichtung die Energiespeichereinrichtung schützt. So könnte beispielsweise die Energiespeichereinrichtung in einem schützenden Aufnahmeelement angeordnet sein, wobei dieses Aufnahmeelement wiederum Stöße gegen die Energiespeichereinrichtung oder auch gegen andere Elemente wie etwa die Sendeeinrichtung oder die Verstärkereinrichtung dämpft.

Bei einer weiteren vorteilhaften Ausführungsform ist die Trageeinrichtung aus einer Gruppe von Trageeinrichtungen ausgewählt, welche Rücksäcke, Tragetaschen, Umhängetaschen, Koffer und dergleichen enthält.

Bei einer weiteren vorteilhaften Ausführungsform handelt es sich bei der Trageeinrichtung insbesondere um einen Rucksack oder allgemein um eine Trageeinrichtung bei dessen Benutzung der Benutzer die Hände während des Tragens frei hat. Auf diese Weise kann der Benutzer durch die Trageeinrichtung ungestört mit dem oder den Werkzeugen hantieren.

Bei einer weiteren vorteilhaften Ausführungsform weist die Trageeinrichtung auch Aufnahmemittel zum Aufnehmen weiterer Werkzeuge auf. So kann beispielsweise während des Betriebs ein Werkzeug in der Trageeinrichtung untergebracht werden, währenddessen sich ein weiteres Werkzeug gerade im Einsatz befindet. So können beispielsweise auch in einem Außenbereich der Trageeinrichtung Halteelemente zum Halten eines weiteren Werkzeugs vorgesehen sein. Auf diese Weise kann der Benutzer auch wechselweise mit mehreren Werkzeugeinrichtungen hantieren und dabei beispielsweise durch gerade nicht benutzte Werkzeugeinrichtungen an einem Bereich der Trageeinrichtung arretieren, jedoch so, dass er sie schnell wieder erreichen kann.

Weiterhin wäre es auch möglich, dass beispielsweise ein Verbindungskabel zwischen der Aufnahmeeinrichtung und dem Werkzeug automatisch oder ausgelöst eingezogen werden kann, sodass dieses Kabel den Benutzer bei der Arbeit nicht behindert.

Bei einer weiteren vorteilhaften Ausführungsform weist die Energiespeichereinrichtung auch eine (Daten)speichereinrichtung zum Speichern von Daten auf. Auf diese Weise können beispielsweise von den Werkzeugeinrichtungen gemessene Werte zwischenzeitlich oder auch permanent gespeichert werden. Auf diese Weise ist ein mobiles Speichern auch größerer Datenmengen möglich.

Bei einer bevorzugten Ausführungsform handelt es sich bei dieser Datenspeichereinrichtung um einen sogenannten Datenlogger. Ein Datenlogger ist eine prozessorgesteuerte Speichereinheit, welche Daten in einem bestimmten Rhythmus über eine Schnittstelle aufnimmt, und auf einem Speicher wiederum ablegt. Dies kann dabei durch eine Software geschehen, wenn die zu loggenden Informationen beispielsweise innerhalb eines Computers schon in digitaler Form vorliegen oder nur aufbereitet werden müssen. Falls die Information hingegen nur in nichtelektronischer Form vorhanden sind, kann der Datenlogger aus einer speziellen und insbesondere mit Sensor kombinierten Hardware bestehen, welche physikalische Messdaten über eine bestimmte Zeit hinweg erfassen kann.

Bevorzugt sind die Werkzeugeinrichtungen dafür geeignet und bestimmt, bestimmte Schraubparameter zu erfassen, wie etwa Schraubdrehmomente, Drehgeschwindigkeiten, Beschleunigungen, Drehwinkel und dergleichen. Daneben können jedoch auch Werte erfasst werden, wie Temperaturen, Spannungen und Beschleunigungen. Dabei können die Werkzeugeinrichtungen Datenausgabeeinrichtungen aufweisen, welche zur Ausgabe von Messwerten dienen. Dabei können diese Datenausgabeeinrichtungen auch geeignet sein, Signale auszugeben, welche die jeweiligen Werkzeuge eindeutig identifizieren. Anhand dieser Signale kann die Energiespeichervorrichtung das jeweilige Werkzeug eindeutig identifizieren. Bevorzugt weist auch die Sendeeinrichtung der Energiespeichervorrichtung eine Ausgabeeinrichtung auf, welche in Signal ausgibt, welches die Energiespeichervorrichtung und/oder die Sendeeinrichtung eindeutig identifiziert. Dabei wäre es auch möglich, dass die Sendeeinrichtung auch dasjenige Signal ausgibt, welches die Werkzeugeinrichtung eindeutig identifiziert.

Durch die erfindungsgemäße Vorgehensweise wird ein gleichzeitiger Betrieb mehrerer Werkzeuge ermöglicht. Durch den Verstärker können Funkverstärkungen auch für größere Reichweiten erreicht werden. Die Speichereinrichtung wiederum ermöglicht ein zumindest zeitweises Speichern von aufgenommenen Messdaten. Auch kann die Speichereinrichtung für größere Datenmengen als Back-Up dienen.

Bei einer weiteren vorteilhaften Ausführungsform weist die Energiespeichereinrichtung eine Synchronisierungseinrichtung auf, um wenigstens ein Element der Energiespeichereinrichtung mit wenigstens einem Element eines anzuschließenden Werkzeugs zu synchronisieren. Dabei ist auch eine automatische Synchronisation bei der Auswahl des Gerätes möglich. Auf diese Weise könnten beispielsweise gerätespezifische Daten synchronisiert werden. Dabei wäre es im Einzelnen möglich, dass ein bestimmtes Werkzeug an die Synchronisierungseinrichtung angeschlossen wird und die Synchronisierungseinrichtung daraufhin das Werkzeug erkennt. Weiterhin könnten gerätespezifische Daten ausgelesen und verwendet werden, um dann das Werkzeug mit bestimmten und bevorzugt voreingestellten Parametern zu betreiben.

Bei einer weiteren vorteilhaften Ausführungsform weist die Energiespeichereinrichtung eine Eingabeeinrichtung auf, bei welcher ein Benutzer Daten und/oder Befehle eingeben kann. So kann beispielsweise ein Touch-Panel oder auch eine Tastatur vorgesehen sein, über welche der Benutzer Daten eingeben kann, beispielsweise die Auswahl eines bestimmten Werkzeugs oder bestimmte Parameter, welche den Schraub- oder Arbeitsvorgang bestimmen. Weiterhin weist die Vorrichtung bevorzugt eine Schalteinrichtung auf, damit der Benutzer ein zu betreibendes Werkzeug auswählen kann.

Daneben könnte beispielsweise ein Eingabemittel vorgesehen sein, über welches sich ein Benutzer identifizieren kann. So wäre es denkbar, dass nur ein ausgewählter Benutzer das jeweilige Werkzeug bedienen kann.

Bei einer weiteren vorteilhaften Ausführungsform weist die Energiespeichervorrichtung eine Anzeigevorrichtung, wie ein Display auf, um bestimmte Daten widerzugeben, wie etwa für den Schraubvorgang charakteristische Daten, wie etwa ein Schraubdrehmoment oder dergleichen.

Die vorliegende Erfindung ist weiterhin auf ein Verfahren zum Betrieb eines tragbaren Werkzeugs gerichtet, wobei das Werkzeug durch eine Energiespeichereinrichtung mit elektrischer Energie versorgt wird, wie in Anspruch 7 beschrieben. Hierbei wird zur Versorgung des tragbaren Werkzeugs eine tragbare Energiespeichereinrichtung verwendet, welche wenigstens zwei Anschlüsse zum Anschluss wenigstens zweier tragbarer Werkzeuge aufweist. Alternativ wäre es auch denkbar, dass lediglich ein Werkzeug angeschlossen wird und mittels einer Erfassungseinrichtung das jeweils angeschlossene Werkzeug identifiziert wird, etwa um dieses entsprechend vorgewählter Parameter zu betreiben. Bevorzugt werden jedoch wenigstens zeitweise zwei Werkzeuge betrieben.

Es wird daher auch verfahrensseitig vorgeschlagen, dass die Werkzeuge über eine insbesondere von diesen getrennte Energiespeichereinrichtung versorgt werden. Vorteilhaft wird bei der Benutzung die Energiespeichereinrichtung in einer Aufnahmeeinrichtung untergebracht. Bei dieser Aufnahmeeinrichtung kann es sich insbesondere aber nicht ausschließlich um einen Rucksack oder dergleichen handeln. Bei einem weiteren bevorzugten Verfahren gibt die Energiespeichervorrichtung Signale und insbesondere Funksignale aus. Vorteilhaft werden diese Signale verstärkt und insbesondere von einer Verstärkereinrichtung, welche Bestandteil der Energiespeichervorrichtung ist, verstärkt. Insbesondere wird für den Betrieb der Werkzeuge eine Energiespeichervorrichtung der oben beschriebenen Art verwendet.

Bevorzugt wird, insbesondere während eines Arbeitsvorgangs wenigstens zeitweise wenigstens ein Messwert gemessen, der für diesen Arbeitsvorgang mit dem Werkzeug charakteristisch ist, wie etwa eine Drehzahl eines Werkzeugkopfes des Werkzeugs, ein Drehmoment oder dergleichen. Bevorzugt wird dieser Messwert von dem Werkzeug bzw. dessen Messeinrichtung ausgegeben. Dabei ist es denkbar, dass dieser Messwert an die Energiespeichervorrichtung ausgegeben wird und von dieser wiederum über die Sendeeinrichtung an ein weiteres Gerät wie etwa einen Computer. Das Messsignal kann dabei beispielsweise über eine Kabelverbindung an die Energiespeichervorrichtung ausgegeben werden, es wäre jedoch auch eine Ausgabe über ein Funksignal denkbar.

Bevorzugt wird die tragbare Energiespeichereinrichtung wenigstens zeitweise in einer von einem Benutzer getragenen Trageeinrichtung transportiert. Vorteilhaft ist dabei die Energiespeichereinrichtung beweglich gegenüber einem insbesondere von einem Benutzer zu haltenden Werkzeug.

Weitere Vorteile und Ausführungsformen ergeben sich aus der beigefügten Zeichnung. Darin zeigt:

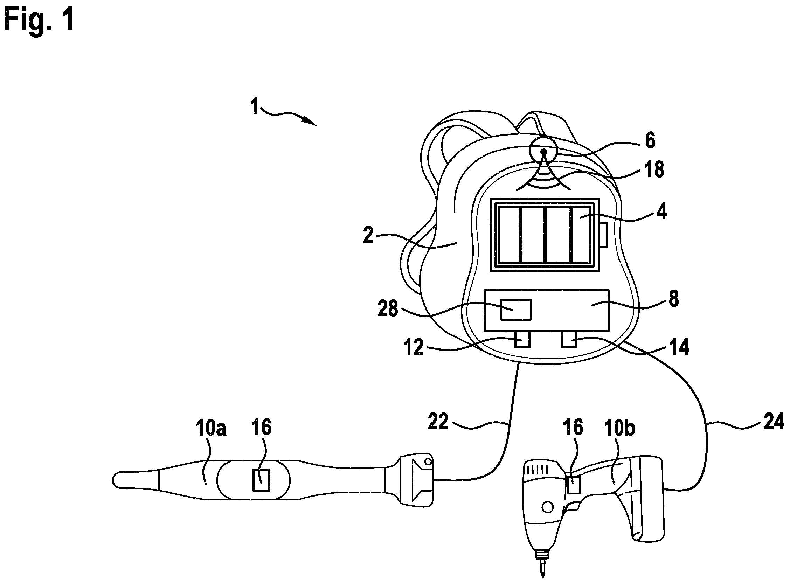

- Fig. 1: eine erfindungsgemäße Energiespeichervorrichtung.

Figur 1 zeigt eine erfindungsgemäße Energiespeichervorrichtung 1. Diese Energiespeichervorrichtung 1 weist eine Aufnahmeeinrichtung 2 und insbesondere eine Trageinrichtung 2 wie einen Rucksack auf, der zur Aufnahme und zum Transport einer Energiespeichereinrichtung 4, insbesondere in Form eines Akkus dient. Dabei kann die Aufnahmeeinrichtung 2 einen Anschluss bzw. einen Ladeanschluss aufweisen, um die Energiespeichereinrichtung 4 an ein Stromnetz anzuschließen und so aufzuladen.

Die Bezugszeichen 10a und 10b beziehen sich auf zwei Werkzeugeinrichtungen, die über Kabel bzw. Leitungen 22 und 24 mit der Energiespeichervorrichtung 1 verbunden sind. Die Bezugszeichen 16 beziehen sich auf (nur schematisch dargestellte) Messeinrichtungen, welche wenigstens einen für das Werkzeug charakteristischen Parameter, wie etwa einen Schraubparameter bestimmen (etwa ein Drehmoment oder eine Drehzahl).

Das Bezugszeichen 6 kennzeichnet eine Sendeeinrichtung, die zur Ausgabe von Signalen, beispielsweise Funksignalen geeignet und bestimmt ist. Bei dieser Sendeeinrichtung können beispielsweise Messparameter, wie beispielsweise von den Werkzeugeinrichtungen 10a und 10b (bzw. den Messeinrichtungen 16) erfasste Messparameter an einen Zentralcomputer gesendet werden. Das Bezugszeichen 18 kennzeichnet grob schematisch eine Verstärkereinrichtung, die zur Verstärkung dieser Funksignale dient.

Das Bezugszeichen 8 kennzeichnet grob schematisch eine (Daten)speichereinrichtung, die zum Speichern von Daten dient, beispielsweise von Messdaten, die von den Werkzeugeinrichtungen 10a und 10b ausgegeben werden. Die Bezugszeichen 12 und 14 kennzeichnen grob schematisch Anschlüsse, über welche die Leitungen 22 und 24 und damit auch die Werkzeugeinrichtungen 10a und 10b an der Energiespeichervorrichtung 1 angeschlossen werden können. Das Bezugszeichen 28 kennzeichnet eine zweite Energiespeichereinrichtung, welche dazu dient, dass (beispielsweise bei einem Ausfall der Energiespeichereinrichtung 4) die in der Speichereinrichtung gespeicherten Daten erhalten bleiben.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können.

### Bezugszeichenliste

- 1: Energiespeichervorrichtung
- 2: Aufnahmeeinrichtung, Trageinrichtung
- 4: Energiespeichereinrichtung
- 6: Sendeeinrichtung
- 8: Speichereinrichtung
- 10a, 10b: zwei Werkzeugeinrichtungen
- 12,14: Anschlüsse
- 16: Messeinrichtung
- 18: Verstärkereinrichtung
- 22, 24: Kabel, Leitungen
- 28: zweite Energiespeichereinrichtung

## Patentansprüche

1. Tragbare Energiespeichervorrichtung (1) zum Betrieb von elektrisch betriebenen Werkzeugeinrichtungen (10a, 10b), mit einer tragbaren Aufnahmeeinrichtung (2), welche zur Aufnahme einer Energiespeichereinrichtung (4) geeignet ist, wobei die Energiespeichereinrichtung (4) wenigstens zwei Anschlüsse (12, 14) zum Anschluss zweier Werkzeugeinrichtungen (10a, 10b) aufweist, wobei die Werkzeugeinrichtungen (10a, 10b) über diese Anschlüsse (12, 14) unabhängig voneinander betreibbar sind, so dass die Energiespeichervorrichtung (1) wenigstens zwei Anschlüsse zum Anschluss zweier Werkzeugeinrichtungen aufweist, wobei die Werkzeugeinrichtungen über diese Anschlüsse unabhängig voneinander betreibbar sind, **dadurch gekennzeichnet, dass** die Energiespeichervorrichtung (1) eine Sendeeinrichtung (6) zur drahtlosen Ausgabe von Daten aufweist und dass die Energiespeichervorrichtung (1) eine Verstärkereinrichtung (18) zur Verstärkung der von der Sendeeinrichtung (6) auszugebenden Signale und/oder der von einer Empfangseinrichtung zu empfangenden Signale aufweist.

2. Tragbare Energiespeichervorrichtung (1) nach wenigstens einem der vorangegangenen Ansprüche, **dadurch gekennzeichnet, dass** die Aufnahmeeinrichtung (2) eine von einem Benutzer tragbare Trageeinrichtung ist.

3. Tragbare Energiespeichervorrichtung (1) nach Anspruch 1, **dadurch gekennzeichnet, dass** die Trageeinrichtung aus einer Gruppe von Trageeinrichtungen ausgewählt ist, welche Rucksäcke, Tragetaschen, Umhängetaschen, Koffer und dergleichen enthält.

4. Tragbare Energiespeichervorrichtung (1) nach wenigstens einem der vorangegangenen Ansprüche, **dadurch gekennzeichnet, dass** die Energiespeichervorrichtung (1) eine Speichereinrichtung (8) zum Speichern von Daten aufweist.

5. Tragbare Energiespeichervorrichtung (1) nach wenigstens einem der vorangegangenen Ansprüche, **dadurch gekennzeichnet, dass** die Energiespeichervorrichtung (1) eine Synchronisierungseinrichtung aufweist, um wenigstens ein Element der Energiespeichervorrichtung (1) mit wenigstens einem Element eines anzuschließenden Werkzeugs (10a, 10b) zu synchronisieren.

6. Tragbare Energiespeichervorrichtung (1) nach wenigstens einem der vorangegangenen Ansprüche, **dadurch gekennzeichnet, dass** die Energiespeichereinrichtung (1) eine Eingabeeinrichtung aufweist, über welche ein Benutzer Daten und/oder Befehle eingeben kann.

7. Verfahren zum Betrieb eines tragbaren Werkzeugs (10a, 10b), wobei das Werkzeug (10a, 10b) durch eine Energiespeichervorrichtung (1) mit elektrischer Energie versorgt wird, wobei zur Versorgung des tragbaren Werkzeugs (10a, 10b) eine tragbare Energiespeichereinrichtung (4) verwendet wird, welche wenigstens zwei Anschlüsse (12, 14) zum Anschluss der tragbaren Werkzeuge (10a, 10b) aufweist **dadurch gekennzeichnet, dass** die Energiespeichervorrichtung (1) mit einer Sendeeinrichtung (6) drahtlos Daten ausgeben kann und dass die Energiespeichervorrichtung (1) mit einer Verstärkereinrichtung (18) die von der Sendeeinrichtung (6) ausgegebenen Signale und/oder die von einer Empfangseinrichtung empfangenen Signale verstärkt.

8. Verfahren nach Anspruch 7, **dadurch gekennzeichnet, dass** die tragbare Energiespeichereinrichtung (4) wenigstens zeitweise in einer von einem Benutzer getragenen Trageeinrichtung (2) transportiert wird.

## Claims

1. Portable energy storage apparatus (1) for operating electrically operated tool devices (10a, 10b), having a portable receiving device (2) which is suitable for receiving an energy storage device (4), wherein the energy storage device (4) has at least two connections (12, 14) for connecting two tool devices (10a, 10b), wherein the tool devices (10a, 10b) can be operated independently of one another via these connections (12, 14), so that the energy storage device apparatus (1) has at least two connections for connecting two tool devices, wherein the tool devices can be operated independently of one another via these connections, **characterized in that** the energy storage apparatus (1) has a transmitting device (6) for wirelessly outputting data, and **in that** the energy storage apparatus (1) has an amplifier device (18) for amplifying the signals to be output by the transmitting device (6) and/or the signals to be received by a receiving device.

2. Portable energy storage apparatus (1) according to Claim 1, **characterized in that** the receiving device (2) is a carrying device that can be carried by a user.

3. Portable energy storage apparatus (1) according to Claim 1, **characterized in that** the carrying device is selected from a group of carrying devices which includes backpacks, tote bags, shoulder bags, cases and the like.

4. Portable energy storage apparatus (1) according to at least one of the preceding claims, **characterized in that** the energy storage apparatus (1) has a memory device (8) for storing data.

5. Portable energy storage apparatus (1) according to at least one of the preceding claims, **characterized in that** the energy storage apparatus (1) has a synchronization device in order to synchronize at least one element of the energy storage apparatus (1) with at least one element of a tool (10a, 10b) to be connected.

6. Portable energy storage apparatus (1) according to at least one of the preceding claims, **characterized in that** the energy storage device (1) has an input device via which a user can input data and/or commands.

7. Method for operating a portable tool (10a, 10b), wherein the tool (10a, 10b) is supplied with electrical power by an energy storage apparatus (1), wherein a portable energy storage device (4) which has at least two connections (12, 14) for connection of the portable tools (10a, 10b) is used for supplying power to the portable tool (10a, 10b), **characterized in that** the energy storage apparatus (1) can output data wirelessly by way of a transmitting device (6), and **in that** the energy storage apparatus (1) can amplify the signals output by the transmitting device (6) and/or the signals received by a receiving device by way of an amplifier device (18).

8. Method according to Claim 7, **characterized in that** the portable energy storage device (4) is transported at least at times in a carrying device (2) carried by a user.

## Revendications

1. Dispositif d'accumulation d'énergie portatif (1) permettant de faire fonctionner des outillages électriques (10a, 10b), comprenant un dispositif de réception portatif (2) qui est conçu pour recevoir un équipement d'accumulation d'énergie (4), l'équipement d'accumulation d'énergie (4) présentant au moins deux connexions (12, 14) pour connecter deux outillages (10a, 10b), les outillages (10a, 10b) pouvant fonctionner indépendamment les uns des autres par l'intermédiaire de ces connexions (12, 14) de sorte que le dispositif d'accumulation d'énergie (1) présente au moins deux connexions pour connecter deux outillages, les outillages pouvant fonctionner indépendamment les uns des autres par l'intermédiaire de ces connexions, **caractérisé en ce que** le dispositif d'accumulation d'énergie (1) présente un équipement émetteur (6) pour la sortie sans fil de données, et **en ce que** le dispositif d'accumulation d'énergie (1) présente un équipement amplificateur (18) pour amplifier les signaux à émettre par l'équipement émetteur (6) et/ou les signaux à recevoir d'un équipement récepteur.

2. Dispositif d'accumulation d'énergie portatif (1) selon la revendication 1, **caractérisé en ce que** l'équipement de réception (2) est un équipement de transport pouvant être porté par un utilisateur.

3. Dispositif d'accumulation d'énergie portatif (1) selon la revendication 1, **caractérisé en ce que** l'équipement de transport est sélectionné dans un groupe d'équipements de transport qui comporte des sacs à dos, des sacoches de transport, des sacs à bandoulière, des mallettes et similaires.

4. Dispositif d'accumulation d'énergie portatif (1) selon au moins l'une des revendications précédentes, **caractérisé en ce que** le dispositif d'accumulation d'énergie (1) présente un équipement de stockage (8) pour stocker des données.

5. Dispositif d'accumulation d'énergie portatif (1) selon au moins l'une des revendications précédentes, **caractérisé en ce que** le dispositif d'accumulation d'énergie (1) présente un équipement de synchronisation pour synchroniser au moins un élément du dispositif d'accumulation d'énergie (1) avec au moins un élément d'un outil (10a, 10b) à connecter.

6. Dispositif d'accumulation d'énergie portatif (1) selon au moins l'une des revendications précédentes, **caractérisé en ce que** le dispositif d'accumulation d'énergie (1) présente un équipement d'entrée par lequel un utilisateur peut entrer des données et/ou des instructions.

7. Procédé permettant de faire fonctionner un outil portatif (10a, 10b), l'outil (10a, 10b) étant alimenté en énergie électrique par un dispositif d'accumulation d'énergie (1), dans lequel, pour l'alimentation de l'outil portatif (10a, 10b), un équipement d'accumulation d'énergie (4) portatif est utilisé qui présente au moins deux connexions (12, 14) pour connecter les outils portatifs (10a, 10b), **caractérisé en ce que** le dispositif d'accumulation d'énergie (1) peut sortir sans fil des données à l'aide d'un équipement émetteur (6), et **en ce que** le dispositif d'accumulation d'énergie (1) amplifie à l'aide d'un équipement amplificateur (18) les signaux émis par l'équipement émetteur (6) et/ou les signaux reçus d'un équipement récepteur.

8. Procédé selon la revendication 7, **caractérisé en ce que** l'équipement d'accumulation d'énergie portatif (4) est transporté au moins temporairement dans un équipement de transport (2) porté par un utilisateur.
